# FASCICULE DE BREVET EUROPEEN

(11) **EP 3 757 943 B1**
(45) Date de publication et mention de la délivrance du brevet: **07.06.2023**
(21) Numéro de dépôt: 20176381.0
(22) Date de dépôt: 25.05.2020
(51) Int. Cl.: G06T 7/73

(54) **PROCÉDÉ ET DISPOSITIF DE TÉLÉMÉTRIE PASSIVE PAR TRAITEMENT D'IMAGE ET UTILISATION DE MODELES EN TROIS DIMENSIONS**
VERFAHREN UND VORRICHTUNG ZUR PASSIVEN TELEMETRIE DURCH BILDVERARBEITUNG, UND VERWENDUNG VON 3D-MODELLEN
METHOD AND DEVICE FOR PASSIVE TELEMETRY BY IMAGE PROCESSING AND USE OF THREE-DIMENSIONAL MODELS

(30) Priorité: 26.06.2019 FR 1906854
(43) Date de publication de la demande: 30.12.2020
(73) Titulaire: MBDA France, 92350 Le Plessis-Robinson (FR)
(72) Inventeur: DORBESSAN, Paul, 92350 Le Plessis-Robinson (FR)
(74) Mandataire: Gevers & Orès

(56) Documents cités:
- US-A1- 2010 092 079
- US-A1- 2019 147 221

## Description

### DOMAINE TECHNIQUE

La présente invention concerne un procédé et dispositif d'estimation de distance (ou de télémétrie) entre un observateur et une cible, à l'aide d'au moins une image générée par un générateur d'images numérique.

Bien que non exclusivement, la présente invention s'applique plus particulièrement au domaine militaire. Dans le domaine militaire, l'estimation de la distance d'une cible ou d'une menace (par rapport à l'observateur) est très importante. Elle présente un intérêt notamment :
- pour le renseignement tactique (position relative d'une cible par rapport à l'observateur) ;
- pour la progression (maintien d'une distance de sécurité) ; et
- pour l'engagement d'une munition (tirs d'obus ou de missiles).

### ÉTAT DE LA TECHNIQUE

Dans le cadre de la présente invention, on entend par cible tout objet, par exemple un bâtiment ou un engin, ou tout autre élément, dont on veut mesurer la distance.

On connaît différents systèmes, basés sur des technologies différentes et variées, pour mesurer la distance entre un observateur et une cible, c'est-à-dire entre la position de l'observateur et celle de la cible.

On connaît notamment des méthodes fondées sur l'analyse d'un signal lumineux émis par l'observateur et réfléchi par la cible observée. Une telle méthode existe dans des systèmes actifs tels qu'un télémètre laser, un scanner 3D, un lidar ou encore des caméras temps de vol. La mesure de distance est réalisée par différentes analyses, mises en oeuvre dans ces systèmes, telles que la mesure de retard de l'écho du signal émis, la mesure du décalage de phase entre les signaux émis et réfléchis, la mesure d'une modulation de fréquence, et la mesure de la décroissance de l'intensité du signal réfléchi.

Toutes les méthodes actives présentent des inconvénients en termes de furtivité. En effet, elles nécessitent l'émission d'un rayonnement électromagnétique vers la cible observée. Ce rayonnement est détectable, ce qui n'est pas souhaitable dans certaines applications. De plus, elle nécessite des équipements actifs spécifiques, susceptibles de présenter un coût élevé.

Il existe également des méthodes passives, en particulier des méthodes par focalisation d'un imageur de faible profondeur de champ. Une telle méthode exige un matériel spécifique qui est mal adapté à d'autres usages qui pourraient être envisagés avec le même dispositif optique, tels que l'observation ou la surveillance d'une zone.

D'autres méthodes passives à base de triangulation présentent également des inconvénients. Un dispositif usuel utilise en général deux imageurs, ce qui pose des problèmes en termes de coût et d'encombrement. De plus, la performance est directement liée à l'écartement entre les deux imageurs, ce qui est particulièrement défavorable à l'encombrement. Une variante avec un seul imageur en mouvement demande à l'observateur de se déplacer, ce qui n'est pas toujours possible.

Par ailleurs, on connaît, par le document US 2010/092079, une méthode pour détecter, identifier et déterminer l'orientation en trois dimensions d'une cible dans une image. La cible prise en compte dans ce document correspond de préférence à un motif, constitué de formes ovoïdales et de couleurs à forts contrastes, assimilable à un code barre ou à un code matriciel (en anglais « OR code » pour « Ouick Response code »).

De plus, on connaît, par le document US 2019/147221, une méthode pour déterminer un modèle en trois dimensions correspondant à un objet détecté dans une image. Cette méthode consiste notamment à détecter l'orientation en trois dimensions d'un objet dans une image afin de lui faire correspondre un modèle en trois dimensions préenregistré avec la même orientation.

Les solutions usuelles précitées ne sont donc pas complètement satisfaisantes.

La présente invention a pour objet de proposer une mesure de distance (ou télémétrie) passive, particulièrement avantageuse.

### EXPOSÉ DE L'INVENTION

La présente invention concerne un procédé d'estimation de distance entre une position d'un observateur et une cible, selon la revendication 1.

Ainsi, grâce à l'invention, on obtient un procédé permettant d'estimer, de façon automatique et sans contact, la distance séparant un objet (cible) et un observateur, sans que ce dernier ait à se déplacer, et ceci au moyen d'un système optique (générateur d'images) qui est passif, c'est-à-dire qui n'émet pas d'ondes électromagnétiques en direction de la cible pour interagir avec elle.

Dans un mode de réalisation préféré, l'étape de détection et d'identification comprend :
- une sous-étape de détection consistant à détecter une cible dans l'image ; et
- une sous-étape de reconnaissance et d'identification consistant à attribuer à la cible détectée une classe. De préférence, ladite classe est l'une des classes suivantes : une classe de reconnaissance, une classe d'identification. L'attribution d'une classe correspond à la détermination d'une catégorie ; si cette catégorie est générique (par exemple, un camion ou un char) on parle de reconnaissance et quand elle permet d'identifier un modèle précis de l'objet (par exemple un modèle particulier de char) on parle d'identification.

Avantageusement, la sous-étape de détection consiste à réaliser l'une des opérations suivantes sur l'image : identifier les pixels de la cible, identifier les pixels du contour de la cible, , générer une boîte englobante englobant la cible. On pourra utiliser avantageusement (mais pas nécessairement et de façon indépendante des modèles d'identification) une technique par apprentissage pour la détection.

De plus, de façon avantageuse, l'étape de détection et d'identification met en oeuvre un apprentissage automatique utilisant des modèles de classification.

Avantageusement, le procédé comprend au moins une étape d'apprentissage, mise en oeuvre antérieurement à l'étape de détection et d'identification, consistant à générer lesdits modèles de classification. En outre, dans un mode de réalisation particulier, ladite étape d'apprentissage met en oeuvre l'un des algorithmes suivants :
- au moins un algorithme de machine à vecteurs de support ;
- au moins un algorithme à base de forêt d'arbres décisionnels ;
- au moins un réseau de neurones à convolution.

La sous-étape de comparaison consiste à attribuer une note à chacune desdites représentations projetées, en fonction de la qualité de la correspondance (mesurée par une mesure de similarité entre la représentation imagée et la représentation projetée), et la sous-étape de sélection consiste à sélectionner la représentation projetée présentant la meilleure note. La qualité de la correspondance correspond à la mesure de l'intégration le long du contour projeté de la distance entre le contour de la représentation imagée et le contour de la représentation projetée.

Par ailleurs, de façon avantageuse, lesdits modèles en trois dimensions de cibles sont des représentations géométriques des cibles sous forme de polygones dans l'espace. Avantageusement, le procédé comprend au moins une étape de génération, mise en oeuvre antérieurement à l'étape de détection et d'identification, consistant à générer lesdits modèles en trois dimensions.

En outre, dans un mode de réalisation particulier, le procédé comprend, de plus, au moins l'une des étapes suivantes :
- une étape de génération d'image, mise en oeuvre antérieurement à l'étape de détection et d'identification, consistant à générer au moins une image à l'aide du générateur d'images à partir de la position de l'observateur ;
- une étape de transmission d'informations, mise en oeuvre postérieurement à l'étape d'estimation de distance, consistant à transmettre au moins la distance estimée à au moins un système utilisateur.

Le procédé peut être mis en oeuvre de deux façons différentes. Plus précisément :
- dans un premier mode de réalisation, il est mis en oeuvre de façon (complètement) automatique ; et
- dans un second mode de réalisation, l'étape de détection et d'identification est mise en oeuvre de façon semi-automatique (avec une intervention d'un opérateur), et l'étape d'estimation de distance est mise en oeuvre de façon automatique.

Dans ce second mode de réalisation, on envisage que l'opérateur puisse intervenir de façon indépendante sur la segmentation de l'objet et sur la classe d'identification de l'objet, à l'aide d'une interface homme/machine (par exemple un logiciel avec une interface graphique mise en oeuvre sur un écran tactile ou avec un curseur). Par exemple, l'opérateur aide le dispositif à dessiner les contours de l'objet, ou il renseigne le type d'objet qu'il a extrait de l'image (par exemple un char d'un type donné.

La présente invention concerne également un dispositif d'estimation de distance entre une position d'un observateur et une cible, selon la revendication 13.

En outre, dans un mode de réalisation particulier, ledit dispositif comporte également au moins l'un des éléments suivants :
- au moins une base de données prédéterminée contenant au moins ladite liste de cibles connues et/ou lesdits modèles en trois dimensions ;
- le générateur d'images numérique configuré pour générer au moins une image à partir de la position de l'observateur ;
- une unité de transmission d'informations configurée pour transmettre au moins la distance estimée à au moins un système utilisateur.

### BRÈVE DESCRIPTION DES FIGURES

Les figures du dessin annexé feront bien comprendre comment l'invention peut être réalisée. Sur ces figures, des références identiques désignent des éléments semblables.
La figure 1 est le schéma synoptique d'un dispositif d'estimation de distance qui illustre un mode de réalisation particulier de l'invention.
La figure 2 montre une application particulière d'une mesure de distance d'une cible.
La figure 3 montre schématiquement une image prise par un générateur d'images numérique, d'une scène contenant une cible.
La figure 4 illustre un premier exemple d'identification d'une cible sur une image.
La figure 5 illustre un second exemple d'identification d'une cible sur une image.
Les figures 6A et 6B sont deux vues différentes en perspective d'une cible représentant un char, destinée à former un modèle en trois dimensions.
La figure 7 illustre un exemple de comparaison entre une représentation imagée d'une cible et une première représentation projetée.

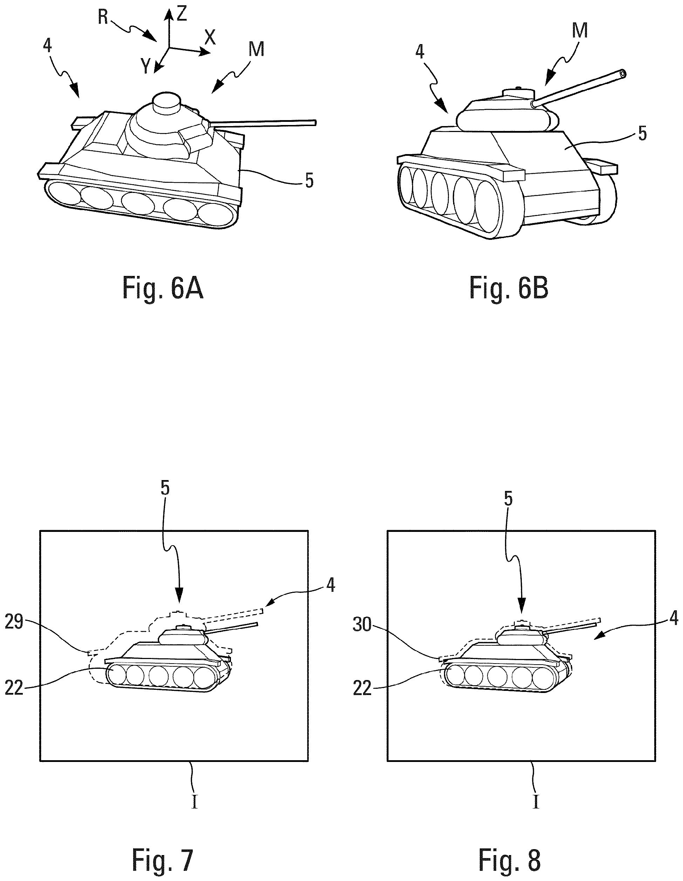

La figure 7 illustre un autre exemple de comparaison entre la représentation imagée d'une cible et une seconde représentation projetée.

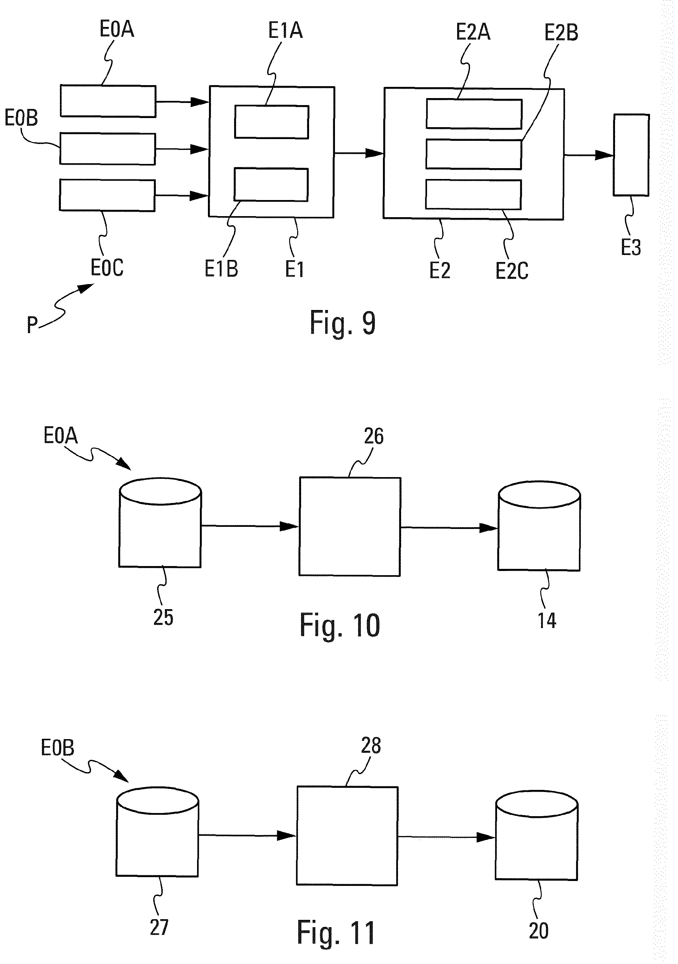

La figure 9 est le schéma synoptique d'un procédé d'estimation de distance de cible.
La figure 10 est le schéma synoptique d'un apprentissage supervisé de modèles de classification.
La figure 11 est le schéma synoptique d'une méthode de génération de modèles en trois dimensions de cibles connues.

### DESCRIPTION DÉTAILLÉE

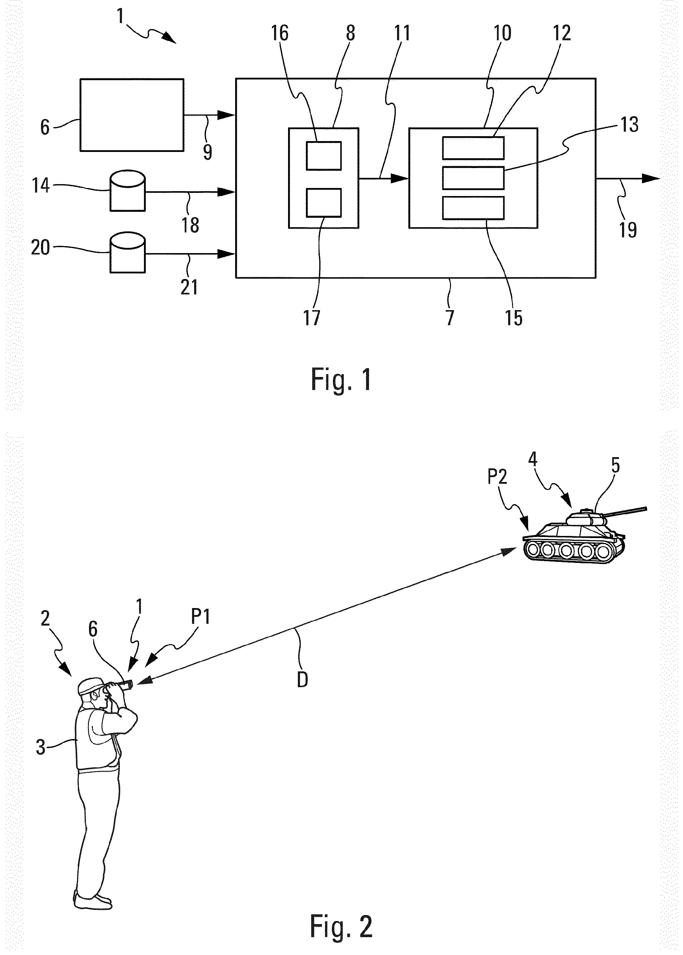

Le dispositif d'estimation de distance 1 (ci-après « dispositif ») représenté schématiquement sur la figure 1 et permettant d'illustrer l'invention, est destiné au moins à estimer la distance entre une position d'un observateur et une position d'une cible. L'observateur est, de préférence, un être humain, mais il peut également correspondre à un système technique qui comprend notamment un générateur d'images numérique.

On entend par cible 4 tout objet, par exemple un bâtiment ou un engin mobile ou non, ou tout autre élément, dont on veut mesurer la distance (par rapport à l'observateur 2). Sur l'exemple de la figure 2, illustrant une application particulière, l'observateur 2 est un militaire 3 et la cible 4 est un char 5. Bien qu'il soit particulièrement approprié au domaine militaire, le dispositif 1 peut également être utilisé dans le domaine civil.

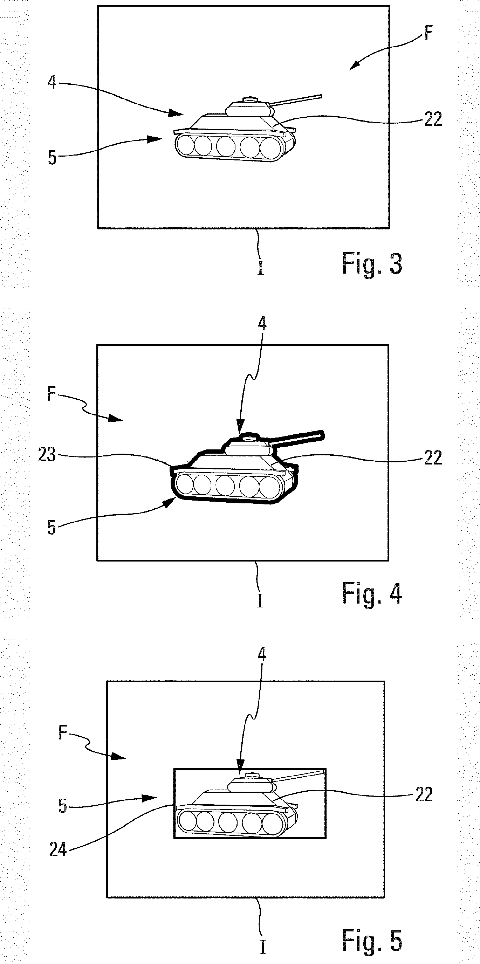

Le dispositif 1 est destiné à estimer la distance à l'aide d'au moins une image I (figure 3) générée par un générateur d'images 6 (ou imageur ou caméra) numérique à partir de la position de l'observateur 2, en mettant en oeuvre notamment un traitement de cette image I. Le générateur d'images 6 qui a pris l'image I peut être actionné (et déclenché) par l'observateur 2 ou bien par une autre personne ou par un système approprié.

Plus précisément, le dispositif 1 est destiné à estimer la distance D entre la position P1 courante de l'observateur 2 (à partir de laquelle a été prise l'image I) et la position P2 courante de la cible 4, comme montré sur la figure 2. On entend par, positions courantes P1 et P2, les positions géographiques de l'observateur 2 et de la cible 4 au moment de la prise de l'image I (utilisée pour l'estimation) par le générateur d'images 6.

Pour la mise en oeuvre de l'invention, on connaît des caractéristiques techniques du générateur d'images 6 et notamment la résolution spatiale dudit générateur d'images 6, à savoir la valeur angulaire de l'angle de vue (ou angle de vision) dans la réalité qui correspond à la longueur d'un pixel dans l'image I générée par ledit générateur d'images 6.

Dans le cadre de la présente invention, l'observateur 2 et/ou la cible 4 n'ont pas besoin d'être mobiles pour mettre en oeuvre l'estimation de distance. Toutefois, l'observateur 2 peut être mobile ou fixe, et la cible 4 peut être mobile ou fixe, pour la mise en oeuvre de la présente invention.

Le dispositif 1 comporte, comme représenté sur la figure 1, une unité centrale 7 qui comprend :
- une unité de détection et d'identification 8 configurée pour détecter et identifier au moins une cible 4 dans l'image I (reçue du générateur d'images 6 via une liaison 9), à partir au moins d'une liste (prédéterminée) de cibles (ou objets) connues, et pour définir une représentation imaginée 22 (figure 3) de la cible 4 identifiée ; et
- une unité d'estimation de distance 10 reliée par l'intermédiaire d'une liaison 11 à l'unité de détection et d'identification 8.

On entend par représentation imaginée 22 d'une cible 4 dans une image I, la représentation (ou partie d'image) représentant cette cible 4 dans l'image I. Pour des raisons de simplification, une seule cible 4 de représentation imagée 22 est montrée sur l'image I de la figure 3, le fond de l'image I étant référencé F.

Le dispositif 1 comporte, de plus, au moins une base de données 14 prédéterminée, contenant au moins ladite liste prédéterminée de cibles connues. Dans un mode de réalisation particulier, le dispositif 1 comporte un ensemble (non représenté) d'une pluralité de bases de données 14, dont une seule est représentée sur la figure 1, comprenant par exemple respectivement des types de cibles différents.

Les cibles connues peuvent être différentes versions ou différents modèles d'un même type d'engin ou objet recherché, par exemple d'un engin mobile, notamment terrestre, tel qu'un char 5, un camion militaire ou autre. Il peut également s'agir de différents types de cibles (char, véhicule de transport, ...).

Dans un premier mode de réalisation représenté sur la figure 1, la base de données 14 ou l'ensemble de bases de données 14 peut être agencé à l'extérieur de l'unité centrale 7 et être relié à cette dernière par l'intermédiaire d'une liaison 18. En outre, dans un second mode de réalisation (non représenté), la base de données 14 ou l'ensemble de bases de données 14 est intégré dans l'unité centrale 7.

Le dispositif 1 comporte, de plus, au moins une base de données 20 prédéterminée, contenant des modèles en trois dimensions (3D) de cibles connues, comme précisé ci-dessous. Ces cibles représentent les cibles prises en compte dans la base de données 14. Dans un mode de réalisation particulier, le dispositif 1 comporte un ensemble (non représenté) d'une pluralité de bases de données 20, dont une seule est représentée sur la figure 1.

Dans un premier mode de réalisation représenté sur la figure 1, la base de données 20 ou l'ensemble de bases de données 20 peut être agencé à l'extérieur de l'unité centrale 7 et être relié à cette dernière par l'intermédiaire d'une liaison 21. En outre, dans un second mode de réalisation (non représenté), la base de données 20 ou l'ensemble de bases de données 20 est intégré dans l'unité centrale 7.

Dans une variante de réalisation, le dispositif 1 comprend une seule base de données (non représentée), et les données des bases de données 14 et 20 sont intégrées dans cette seule et même base de données.

Dans un mode de réalisation préféré, l'unité de détection et d'identification 8 comprend :
- une unité de détection 16 configurée pour détecter une cible 4 dans l'image I ; et
- une unité de reconnaissance et d'identification 17 configurée pour attribuer à la cible détectée une classe.

L'unité de détection et d'identification 8 comprend, ainsi, une chaîne de traitement de type DRI (pour « Détection, Reconnaissance et Identification ») qui a pour fonction de détecter et localiser, ainsi que d'identifier les objets (ou cibles) de la base de données 14 qui sont éventuellement présents dans l'image I.

En outre, l'unité d'estimation de distance 10 comporte :
- un élément de projection 12 configuré pour réaliser sur l'image I une pluralité de projections différentes d'un modèle en trois dimensions de ladite cible identifiée afin d'obtenir des représentations projetées de la cible, comme précisé ci-dessous, les représentations projetées dépendant de caractéristiques du générateur d'images 6, chacune desdites représentations projetées étant représentative d'une distance associée de la cible 4 et d'une orientation associée de la cible 4 ;
- un élément de comparaison 13 configuré pour comparer la représentation imagée de la cible 4 à chacune desdites représentation projetées ; et
- un élément de sélection 15 configuré pour sélectionner la représentation projetée la plus similaire de la représentation imagée, la distance associée à cette représentation projetée sélectionnée représentant ladite distance D estimée entre la position de l'observateur 2 et la cible 4.

En outre, dans un mode de réalisation particulier, ledit dispositif 1 comporte également le générateur d'images 6 qui est donc configuré pour générer au moins une image I à partir de la position P1 de l'observateur 2.

Dans un mode de réalisation préféré, le générateur d'images 6 est un imageur optoélectronique, par exemple une caméra RVB (pour « Rouge, Vert, Bleu » ou « RGB » en anglais pour « Red, Green, Blue ») ou une caméra infrarouge.

Par ailleurs, dans un mode de réalisation particulier, ledit dispositif 1 comporte une unité de transmission d'informations (non représentée) qui est configurée pour transmettre au moins la distance D estimée (ainsi que l'identité de la cible par exemple) à au moins un système utilisateur (non représenté) via une liaison 19 (figure 1).

Le dispositif 1, tel que décrit ci-dessus, met en oeuvre un procédé d'estimation de distance P (ci-après « procédé ») représenté sur la figure 9.

Ledit procédé P comprend, comme représenté sur la figure 9, une suite d'étapes E1 et E2 comprenant :
- une étape de détection et d'identification E1, mise en oeuvre par l'unité de détection et d'identification 8, consistant à détecter et identifier au moins une cible 4 dans l'image I générée par le générateur d'image 6. L'identification consiste à retrouver dans l'image I au moins une cible 4 correspondant à l'une des cibles faisant partie de la liste de cibles connues contenue dans la base de données 14 ; et
- un étape d'estimation de distance E2, mise en oeuvre par l'unité d'estimation de distance 10.

Ledit procédé P comprend également, comme représenté sur la figure 9, une étape de transmission d'informations E3, mise en oeuvre postérieurement à l'étape d'estimation de distance E2, consistant à transmettre au moins la distance D estimée (ainsi que l'identité de la cible par exemple) à au moins un système utilisateur.

Dans un mode de réalisation préféré, l'étape de détection et d'identification E1 comprend :
- une sous-étape de détection E1A, mise en oeuvre par l'unité de détection 16, consistant à détecter une cible 4 dans l'image I ; et
- une sous-étape de reconnaissance et d'identification E1B, mise en oeuvre par l'unité de reconnaissance et d'identification 17, consistant à attribuer à la cible 4 détectée dans l'image I, une classe de reconnaissance ou une classe d'identification, précisées ci-dessous.

La sous-étape de détection E1A consiste à réaliser l'une des opérations suivantes sur l'image : identifier les pixels du contour de la cible ou les pixels de la cible ou bien générer une boîte englobante englobant la cible.

La sous-étape de détection E1A a pour but de segmenter la cible 4 finement, c'est-à-dire de la distinguer du fond F de l'image I (figures 4 et 5).

Pour ce faire, dans un premier mode de réalisation représenté sur la figure 4, la sous-étape de détection E1A identifie les pixels appartenant au contour 23 de la cible 4, comme mis en évidence par un trait épais sur la figure 4.

En outre, dans un second mode de réalisation représenté sur la figure 5, la sous-étape de détection E1A génère une boîte englobante 24, de préférence de forme rectangulaire, qui englobe la cible 4. La boîte englobante 24 est la boîte de surface la plus petite apte à englober complètement la cible 4.

L'étape de détection et d'identification E1 a donc pour but de détecter et localiser, ainsi que d'identifier les cibles de la base de données 14, éventuellement présentes dans l'image I.

Cette étape de détection et d'identification E1 comprend donc deux fonctions (ou sous-étapes) principales, à savoir :
- la sous-étape de détection E1A, dont le but est de segmenter la cible 4 finement dans l'image I, c'est-à-dire de la distinguer du fond F de l'image I ; et
- la sous-étape de reconnaissance et d'identification E1B, dont le but est d'attribuer à toute cible 4 (détectée dans l'image I à la sous-étape de détection E1A) une classe de reconnaissance (correspondant à un niveau de connaissance lié à la catégorie de la cible ; par exemple, une voiture que l'on distingue d'un piéton) ou bien une classe d'identification (correspondant à un niveau de connaissance plus précis que la classe de reconnaissance ; par exemple s'il s'agit d'une voiture ou d'un char, la connaissance de son modèle précis).

Dans les deux sous-étapes E1A et E1B, les méthodes envisagées pour remplir les fonctions sont fondées sur des techniques d'apprentissage automatique (« machine learning » en anglais). L'apprentissage automatique utilise des modèles construits au préalable lors d'une phase d'apprentissage. Cette phase d'apprentissage est réalisée hors ligne, c'est-à-dire qu'elle est mise en oeuvre une seule fois avant d'utiliser le dispositif 1 dans une seconde phase en ligne (ou de test) sur des images d'observation. Lors de cette phase, un algorithme d'apprentissage construit des modèles utilisés ensuite lors de la phase de test.

On parle de modèles de classification, car ils permettent au dispositif de classer les exemples de cibles extraits de la scène observée :
- dans le cas de la détection, en cibles connues ou inconnues (ou exemple de fond) ; et
- dans le cas de la reconnaissance et de l'identification, en différentes catégorie (ou modèles ou versions) de cibles connues.

Le procédé P comprend au moins une étape d'apprentissage E0A, mise en oeuvre antérieurement à l'étape de détection et d'identification E1, consistant à générer les modèles (de classification) enregistrés dans la base de données 14.

L'algorithme d'apprentissage envisagé utilise pour construire les modèles, une base d'images d'exemple, dont la réponse idéale par les modèles de classification (détection et classes de reconnaissance et d'identification) est connue. Les classes sont prédéterminées. On parle de données étiquetées. Une telle technique d'apprentissage utilisant des données étiquetées par un expert est dite d'apprentissage supervisé. La base d'images étiquetées utilisée par l'apprentissage est appelée base de données d'apprentissage. Elle peut potentiellement comprendre un grand nombre d'images.

La figure 10 illustre l'étape d'apprentissage E0A. Plus précisément, à partir d'une base de données d'apprentissage 25, un apprentissage supervisé de modèles de classification de DRI (référence 26) est mis en oeuvre de manière à générer les modèles à stocker dans la base de données 14.

A titre d'illustration, on peut citer quelques exemples d'algorithmes à base d'apprentissage supervisé pouvant être utilisés dans l'étape d'apprentissage E0A (figures 9 et 10) :
- des algorithmes de machine à vecteurs de support de type SVM (pour « Support Vector Machine » en anglais), associés à un descripteur visuel, par exemple de type HOG (pour « Histogram of Oriented Gradient » en anglais) ;
- des algorithmes à base de forêt d'arbres décisionnels (forêt aléatoire ou « random forest classifier » en anglais) ;
- des réseaux de neurones à convolution, en particulier d'apprentissage profond (« deep learning » en anglais), qui présentent des solutions permettant de produire par apprentissage des classifieurs.

Par conséquent, les entrées de l'unité de détection et d'identification 8 (mettant en oeuvre l'étape de détection et d'identification E1) sont les suivantes :
- une image I numérique d'observation de la scène (contenant la cible 4), dans laquelle on souhaite mesurer la distance d'une ou de plusieurs cibles, image I qui est reçue du générateur d'images 6 par l'intermédiaire de la liaison 9 ; et
- des modèles de DRI de cibles connues, qui ont été obtenus par apprentissage automatique, qui sont contenus dans la base de données 14 et qui sont reçus par l'intermédiaire de la liaison 18.

Les sorties de l'unité de détection et d'identification 8 (mettant en oeuvre l'étape de détection et d'identification E1), qui sont transmises à l'unité d'estimation de distance 10, sont les suivantes :
- une segmentation de la cible, à savoir les listes des pixels appartenant à la cible ou les listes des pixels appartenant au contour 23 de la cible 4 (figure 4) ou les coordonnées de la boîte englobante 24 de la cible 4 (figure 5) ; et
- un label attribué à la cible 4 à la sous-étape de reconnaissance et d'identification E1B.

L'unité de détection et d'identification 8 fournit donc une segmentation de la cible 4 et son label dans la base de données 14.

Les traitements décrits dans la présente description pour estimer la distance d'une cible 4 identifiée sur une image I peuvent bien entendu être mis en oeuvre (de manière similaire à chaque fois) pour estimer les distances de chacune d'une pluralité de cibles, dans le cas où plusieurs cibles (connues) sont identifiées sur l'image I.

Une fois la cible finement localisée dans l'image I et identifiée, le procédé P comprend l'étape d'estimation de distance E2 mise en oeuvre par l'unité d'estimation de distance 10.

L'étape d'estimation de distance E2 comprend une sous-étape de projection E2A, mise en oeuvre par l'élément de projection 12, consistant à réaliser sur l'image I une pluralité de projections différentes d'un modèle en trois dimensions de ladite cible 4 identifiée. Les figures 6A et 6B montrent deux vues en perspective de la cible 4, en l'occurrence un char 5, permettant de définir un modèle M (en trois dimensions) de ladite cible 4. Dans un mode de réalisation préféré (non représenté), chaque modèle M d'une cible est la représentation géométrique de la cible sous la forme de polygones dans l'espace.

Cette pluralité de projections différentes du modèle M (en trois dimensions) sur l'image I permet d'obtenir des représentations projetées 29 et 30 de la cible 4, comme représenté sur les figures 7 et 8. Chacune desdites représentations projetées 29 et 30 est donc une représentation en deux dimensions (2D) par projection sur l'image I. Ces représentations projetées 29 et 30 dépendent de caractéristiques du générateur d'images 6, et plus particulièrement de la résolution spatiale dudit générateur d'images 6, à savoir la valeur angulaire de l'angle de vue (ou angle de vision) dans la réalité qui correspond à la longueur d'un pixel dans l'image I générée par ledit générateur d'images 6.

Chacune desdites représentations projetées 29 et 30 est représentative d'une distance particulière donnée (associée) de la cible 4 par rapport au générateur d'images 6 et d'une orientation particulière donnée (associée) de la cible 4 dans l'espace. L'orientation peut être modifiée en déplaçant le modèle M autour et/ou le long d'une des directions X, Y et Z d'un repère R représenté à titre d'illustration sur la figure 6A.

L'étape d'estimation de distance E2 comprend également une sous-étape de comparaison E2B, mise en oeuvre par l'élément de comparaison 13, consistant à comparer la représentation imagée 22 de la cible 4 à chacune desdites représentations projetées 29 et 30, comme représenté pour la représentation projetée 29 sur la figure 7 et pour la représentation projetée 30 sur la figure 8.

En outre, l'étape d'estimation de distance E2 comprend une sous-étape de sélection E2C, mise en oeuvre par l'élément de sélection 15, consistant à sélectionner, parmi l'ensemble des représentations projetées 29 et 30 comparées à l'étape de comparaison E2B à la représentation imagée 22, la représentation projetée la plus similaire de ladite représentation imagée 22, à savoir la représentations projetée 30 dans notre exemple.

Pour ce faire, dans un mode de réalisation préféré, la sous-étape de comparaison E2B à attribue une note à chacune desdites représentations projetées 29 et 30, en fonction de la qualité de la correspondance, et la sous-étape de sélection E2C sélectionne la représentation projetée présentant la meilleure note, sachant que plus la correspondance (ou la qualité de la correspondance) est bonne plus la note est élevée.

On entend par qualité de la correspondance (pour une représentation projetée donnée ou considérée) le résultat de la mesure de l'intégration (le long du contour de la représentation projetée considérée) de la distance entre le contour de la représentation imagée et le contour de ladite représentation projetée considérée. Pour avoir une bonne correspondance et ainsi une note élevée, il convient d'avoir une distance (intégrée le long du contour) entre les deux contours (de la représentation imagée et de la représentation projetée) la plus faible possible, c'est-à-dire d'avoir une représentation projetée la plus similaire de la représentation imagée.

La distance associée à la représentation projetée 30 sélectionnée représente ladite distance D estimée entre la position du générateur d'images 6 (et donc de l'observateur 2) et celle de la cible 4.

L'étape d'estimation de distance E2 consiste donc à mettre en regard la cible 4 observée dans les pixels de l'image I (représentation imagée 22) et une modélisation géométrique de cette cible 4 (comprenant sa forme en trois dimensions et les mesures de ses dimensions en mètre). La comparaison des dimensions en pixel de la représentation imagée 22 de la cible 4 et des dimensions en mètre de son modèle géométrique permet de produire une estimation de la distance entre la cible 4 et l'observateur 2, en connaissant la résolution angulaire du générateur d'images 6.

L'étape d'estimation de distance E2 s'appuie sur l'utilisation de modèles 3D de cibles connues. Par conséquent, on dispose d'un modèle 3D pour chacun des cibles présentes dans la base de connaissance (base de données 14), que l'on a été capable de segmenter et d'identifier, et que l'on souhaite télémétrer. On utilise une transformation du modèle 3D dont les paramètres fournissent une estimation de la distance cherchée. On utilise une transformation de ce modèle dépendant de l'image d'observation de la cible que l'on est en train de traiter. Cette transformation est la projection de du modèle 3D dans l'image. Il s'agit de la projection de la cible en 3D dont le résultat est l'image de cette cible vue par le générateur d'images 6 si elle s'était trouvée dans la scène observée à une certaine distance (associée) et avec une certaine orientation (associée). Les paramètres de cette projection sont donc les caractéristiques géométriques du générateur d'images 6 utilisé, l'orientation (ou pose) dans l'espace du modèle, et la distance à laquelle se trouverait la cible ainsi observée. Le résultat de cette projection est un profil (ou contour ou silhouette) en deux dimensions dans l'image I, correspondant auxdites représentions projetées 29 et 30.

On projette donc le modèle selon différents paramètres d'orientation et de distance afin d'obtenir le profil (ou contour) du modèle projeté le plus proche possible du profil (ou contour) de la cible, réellement observé dans l'image I (représentation imagée 22). On cherche donc la meilleure projection, ce qui demande par ailleurs la construction d'un score de cette projection pour évaluer à quel point le profil projeté correspond à la cible observée. Le meilleur score de projection obtenu après exploration de plusieurs paramètres de projection fournit la distance probable entre la cible et l'observateur. En d'autres termes, le meilleur jeu de paramètres (distance, orientation) obtenu fournit l'estimation de distance.

De préférence, les modèles 3D sont des représentations géométriques des cibles connues sous la forme de polygones dans l'espace. Ils sont construits à partir de la connaissance de la géométrie des cibles de la base de données 14.

Le procédé P comprend également au moins une étape de génération E0B, mise en oeuvre antérieurement à l'étape de détection et d'identification E1, consistant à générer lesdits modèles 3D enregistrés dans la base de données 20.

La figure 11 illustre l'étape de génération E0B. Plus précisément, à partir d'une base de données 27, une génération (ou construction) de modèles 3D (référence 28) est mise en oeuvre de manière à générer les modèles 3D à stocker dans la base de données 20. Cette génération de modèles consiste à construire ces modèles à partir de plans en trois dimensions des cibles de la base de données 14 en utilisant un outil de modélisation polygonale tridimensionnelle (par exemple un logiciel de modélisation 3D classiquement utilisé dans le domaine de l'infographie tridimensionnelle). La finesse de la maille des polygones utilisée par ces modèles doit permettre une estimation de distance suffisamment précise lors de la sous-étape de projection. De plus, ces modèles peuvent subir des traitements particuliers afin de leur conférer des propriétés topologiques garantissant la faisabilité de la projection utilisée par le dispositif.

Le procédé P, tel que décrit ci-dessus, peut être mis en oeuvre de deux façons différentes.

Dans un premier mode de réalisation, il est mis en oeuvre de façon entièrement automatique.

Dans un second mode de réalisation, l'étape de détection et d'identification E1 est mise en oeuvre de façon semi-automatique (avec une intervention d'un opérateur). Dans ce cas, l'opérateur impose ou corrige la segmentation et/ou l'identification de la cible. De plus, l'étape d'estimation de distance E2 est, quant à elle, mise en oeuvre de façon automatique.

Le procédé P comprend également au moins une étape de génération d'image E0C, mise en oeuvre antérieurement à l'étape de détection et d'identification E1, consistant à générer au moins une image I à l'aide du générateur d'images 6 à partir de la position P1 de l'observateur 2.

Dans un mode de réalisation particulier, le dispositif 1 comporte des éléments de calcul de distance supplémentaires (non représentés) reposant sur plusieurs techniques utilisées en parallèle. Le résultat généré (distance estimée) est obtenu, dans ce mode de réalisation, à partir d'une combinaison (moyenne, ...) des résultats de ces différentes techniques. On peut ainsi mettre à profit la complémentarité des différentes techniques pour améliorer la robustesse et la précision globale de l'estimation de la distance.

Le procédé P permet donc d'estimer la distance D entre une cible 4 observée dans une image numérique I et le générateur d'images 6 (qui a généré cette image numérique I) qui est caractérisé géométriquement (calibré). Plus particulièrement, la chaîne de traitement mise en oeuvre par le procédé P permet une mesure de distance entre la cible observée connue et l'observateur, à partir d'une seule image (une seule caméra, à un instant donné) et sans émissions électromagnétiques destinées à illuminer la cible (système passif).

Le procédé P permet d'estimer, de façon automatique et sans contact, la distance séparant une cible et son observateur sans que ce dernier n'ait à se déplacer, au moyen d'un système optique (générateur d'images 6) passif.

En résumé, le procédé P se limite à la mesure de la distance entre l'observateur 2 et un ensemble de cibles 4 connues au préalable et caractérisées géométriquement. On dispose pour cela d'une base de données de cibles, dont on connaît notamment les dimensions, et on cherche à mesurer la distance D entre l'observateur 2 et ces cibles 4 lorsqu'on les observe dans une image I numérique issue du générateur d'images 6 utilisé. Le générateur d'images 6 est calibré. Plus particulièrement, sa résolution angulaire est connue. Lorsque l'image I d'observation est générée, elle est soumise à une chaîne de traitement (procédé P), présentant deux étapes principales.

Le procédé P (d'estimation de distance), tel que décrit ci-dessus, présente notamment les avantages suivants :
- il est passif et nécessite uniquement un générateur d'images (ou imageur) qui est calibré et au moins une base de données 14 contenant des cibles observées ;
- il propose une solution passive, non détectable (furtive) à la différence des solutions actives ;
- il est simple à mettre en oeuvre ;
- il n'a pas besoin d'un matériel particulièrement spécifique. Il utilise un dispositif matériel monoculaire (à un seul imageur) à la fois peu encombrant, peu coûteux, relativement simple et non spécialisé ; et
- il réalise la mesure de distance au moyen de traitements d'images automatiques fondés principalement sur des aspects géométriques et n'ayant pas besoin d'un modèle complexe de transmission atmosphérique. Sa mise en oeuvre ne nécessite donc pas de connaissance d'un modèle d'absorption atmosphérique.

## Revendications

1. Procédé d'estimation de distance entre une position d'un observateur et une cible, à l'aide d'au moins une image (I) générée par un générateur d'images (6) numérique à partir de la position (P1) de l'observateur (2),
**caractérisé en ce qu'**il comprend une suite d'étapes comprenant :
- une étape de détection et d'identification (E1) consistant à détecter et identifier au moins une cible (4) dans l'image (I), à partir au moins d'une liste de cibles connues, et à définir une représentation imagée (22) de la cible (4) identifiée ; et
- une étape d'estimation de distance (E2) comprenant :
• une sous-étape de projection (E2A) consistant à réaliser sur l'image (I) une pluralité de projections différentes d'un modèle (M) en trois dimensions de ladite cible (4) identifiée afin d'obtenir des représentations projetées (29, 30) de la cible (4), lesdites représentations projetées (29, 30) dépendant de caractéristiques du générateur d'images (6), chacune desdites représentations projetées (29, 30) étant représentative d'une distance associée de la cible (4) et d'une orientation associée de la cible (4) ;
• une sous-étape de comparaison (E2B) consistant à comparer la représentation imagée (22) de la cible (4) à chacune desdites représentations projetées (29, 30), la sous-étape de comparaison (E2B) consiste à attribuer une note à chacune desdites représentations projetées (29, 30) en fonction de la qualité de la correspondance, la qualité de la correspondance correspond à la mesure de l'intégration, le long du contour de la représentation projetée (29, 30), de la distance entre le contour de la représentation imagée (22) et le contour de ladite représentation projetée (29, 30) ; et,
• une sous-étape de sélection (E2C) consistant à sélectionner la représentation projetée (30) présentant la meilleure note, la distance associée à cette représentation projetée (30) sélectionnée représentant ladite distance (D) estimée entre la position de l'observateur (2) et la cible (4).

2. Procédé selon la revendication 1,
**caractérisé en ce que** l'étape de détection et d'identification (E1) comprend :
- une sous-étape de détection (E1A) consistant à détecter au moins une cible (4) dans l'image (I) ; et
- une sous-étape de reconnaissance et d'identification (E1B) consistant à attribuer à la cible (4) détectée une classe.

3. Procédé selon la revendication 2,
**caractérisé en ce que** la sous-étape de détection (E1A) consiste à réaliser l'une des opérations suivantes sur l'image (I) : identifier des pixels de la cible (4), identifier des pixels d'un contour (23) de la cible (4), générer une boîte englobante (24) englobant la cible(4).

4. Procédé selon l'une des revendications 2 et 3,
**caractérisé en ce que** la classe est une des classes suivantes : une classe de reconnaissance, une classe d'identification, l'attribution d'une classe de reconnaissance correspondant à l'attribution d'une catégorie générique, et l'attribution d'une classe d'identification correspondant à l'attribution d'un modèle précis d'une catégorie générique.

5. Procédé selon l'une quelconque des revendications précédentes,
**caractérisé en ce que** l'étape de détection et d'identification (E1) met en oeuvre un apprentissage automatique utilisant des modèles de classification.

6. Procédé selon la revendication 5,
**caractérisé en ce qu'**il comprend au moins une étape d'apprentissage (E0A), mise en oeuvre antérieurement à l'étape de détection et d'identification (E1), consistant à générer lesdits modèles de classification.

7. Procédé selon l'une quelconque des revendications précédentes **caractérisé en ce que** lesdits modèles (M) en trois dimensions de cibles (4) sont des représentations géométriques des cibles (4) sous forme de polygones dans l'espace.

8. Procédé selon l'une quelconque des revendications précédentes,
**caractérisé en ce qu'**il comprend au moins une étape de génération (E0B), mise en oeuvre antérieurement à l'étape de détection et d'identification (E1), consistant à générer lesdits modèles (M) en trois dimensions.

9. Procédé selon la revendication 6,
**caractérisé en ce que** ladite étape d'apprentissage (E0A) met en oeuvre l'un des algorithmes suivants :
- au moins un algorithme de machine à vecteurs de support ;
- au moins un algorithme à base de forêt d'arbres décisionnels ;
- au moins un réseau de neurones à convolution.

10. Procédé selon l'une quelconque des revendications précédentes, **caractérisé en ce qu'**il comprend, de plus, au moins l'une des étapes suivantes :
- une étape de génération d'image (EOC), mise en oeuvre antérieurement à l'étape de détection et d'identification (E1), consistant à générer au moins une image (I) à l'aide du générateur d'images (6) à partir de la position (P1) de l'observateur (2) ;
- une étape de transmission d'informations (E3), mise en oeuvre postérieurement à l'étape d'estimation de distance (E2), consistant à transmettre au moins la distance (D) estimée à au moins un système utilisateur.

11. Procédé selon l'une quelconque des revendications 1 à 102, **caractérisé en ce qu'**il est mis en oeuvre de façon automatique.

12. Procédé selon l'une quelconque des revendications 1 à 10,
**caractérisé en ce que** l'étape de détection et d'identification (E1) est mise en oeuvre de façon semi-automatique, et **en ce que** l'étape d'estimation de distance (E2) est mise en oeuvre de façon automatique.

13. Dispositif d'estimation de distance entre une position d'un observateur et une cible, à l'aide d'au moins une image (I) générée par un générateur d'images (6) numérique à partir de la position (P1) de l'observateur (2),
**caractérisé en ce qu'**il comporte :
- une unité de détection et d'identification (8) configurée pour détecter et identifier au moins une cible (4) dans l'image (I), à partir au moins d'une liste de cibles connues, et pour définir une représentation imagée (22) de la cible (4) identifiée ; et
- une unité d'estimation de distance (10) configurée pour :
• réaliser sur l'image (I) une pluralité de projections différentes d'un modèle (M) en trois dimensions de ladite cible (4) identifiée afin d'obtenir des représentations projetées (29, 30) de la cible (4), les représentations projetées (29, 30) dépendant de caractéristiques du générateur d'images (6), chacune desdites représentations projetées (29, 30) étant représentative d'une distance associée de la cible (4) et d'une orientation associée de la cible (4) ;
• comparer la représentation imagée (22) de la cible (4) à chacune desdites représentation projetées (29, 30) en attribuant une note à chacune desdites représentations projetées (29, 30) en fonction de la qualité de la correspondance, la qualité de la correspondance correspond à la mesure de l'intégration, le long du contour de la représentation projetée (29, 30), de la distance entre le contour de la représentation imagée (22) et le contour de ladite représentation projetée (29, 30) ; et
• sélectionner la représentation projetée (30) présentant la meilleure note, la distance associée à cette représentation projetée (30) sélectionnée représentant ladite distance (D) estimée entre la position de l'observateur (2) et la cible (4).

14. Dispositif selon la revendication 13,
**caractérisé en ce qu'**il comporte, de plus, au moins l'un des éléments suivants :
- au moins une base de données (14, 20) prédéterminée contenant au moins ladite liste de cibles (4) connues et/ou lesdits modèles (M) en trois dimensions ;
- le générateur d'images (6) numérique configuré pour générer au moins une image (I) à partir de la position (P1) de l'observateur (2) ;
- une unité de transmission d'informations configurée pour transmettre au moins la distance (D) estimée à au moins un système utilisateur.

## Patentansprüche

1. Verfahren zur Schätzung eines Abstandes zwischen einer Position eines Beobachters und einem Ziel mithilfe mindestens eines Bildes (I), das von einem numerischen Bildgenerator (6) ausgehend von der Position (P1) des Beobachters (2) erzeugt wird,
**dadurch gekennzeichnet, dass** es eine Abfolge von Schritten umfasst, umfassend:
- einen Schritt der Erfassung und der Identifizierung (E1), der darin besteht, ausgehend von mindestens einer Liste bekannter Ziele mindestens ein Ziel (4) im Bild (I) zu erfassen und zu identifizieren, und darin, eine abgebildete Darstellung (22) des identifizierten Ziels (4) zu definieren; und
- einen Schritt der Abstandschätzung (E2), umfassend:
- einen Teilschritt der Projektion (E2A), der darin besteht, auf dem Bild (I) eine Vielzahl von unterschiedlichen Projektionen eines dreidimensionalen Modells (M) des identifizierten Ziels (4) auszuführen, um projizierte Darstellungen (29, 30) des Ziels (4) zu erhalten, wobei die projizierten Darstellungen (29, 30) von Eigenschaften des Bildgenerators (6) abhängen, wobei jede der projizierten Darstellungen (29, 30) repräsentativ ist für einen mit dem Ziel (4) verknüpften Abstand und eine mit dem Ziel (4) verknüpfte Ausrichtung;
- einen Teilschritt des Vergleichs (E2B), der darin besteht, die abgebildete Darstellung (22) des Ziels (4) mit jeder der projizierten Darstellungen (29, 30) zu vergleichen, wobei der Teilschritt des Vergleichs (E2B) darin besteht, jeder der projizierten Darstellungen (29, 30) in Abhängigkeit von der Qualität der Entsprechung eine Note zuzuweisen, wobei die Qualität der Entsprechung dem Integrationsmaß, entlang der Kontur der projizierten Darstellung (29, 30), des Abstands zwischen der Kontur der abgebildeten Darstellung (22) und der Kontur der projizierten Darstellung (29, 30) entspricht; und
- einen Teilschritt der Auswahl (E2C), der darin besteht, die projizierte Darstellung (30) auszuwählen, die die beste Note aufweist, wobei der mit dieser ausgewählten projizierten Darstellung (30) verknüpfte Abstand den geschätzten Abstand (D) zwischen der Position des Beobachters (2) und dem Ziel (4) darstellt.

2. Verfahren nach Anspruch 1,
**dadurch gekennzeichnet, dass** der Schritt der Erfassung und der Identifizierung (E1) umfasst:
- einen Teilschritt der Erfassung (E1A), der darin besteht, mindestens ein Ziel (4) im Bild (I) zu erfassen; und
- einen Teilschritt der Erkennung und der Identifizierung (E1B), der darin besteht, dem erfassten Ziel (4) eine Klasse zuzuweisen.

3. Verfahren nach Anspruch 2,
**dadurch gekennzeichnet, dass** der Teilschritt der Erfassung (E1A) darin besteht, einen der folgenden Vorgänge am Bild (I) auszuführen: Identifizieren der Pixel des Ziels (4), Identifizieren der Pixel einer Kontur (23) des Ziels (4), Erzeugen eines umschließenden Kastens (24), der das Ziel (4) umschließt.

4. Verfahren nach einem der Ansprüche 2 und 3,
**dadurch gekennzeichnet, dass** die Klasse eine der folgenden Klassen ist: eine Erkennungsklasse, eine Identifizierungsklasse, wobei die Vergabe einer Erkennungsklasse der Vergabe einer allgemeinen Kategorie entspricht und die Vergabe einer Identifizierungsklasse der Vergabe eines präzisen Modells einer allgemeinen Kategorie entspricht.

5. Verfahren nach einem der vorstehenden Ansprüche,
**dadurch gekennzeichnet, dass** der Schritt der Erfassung und der Identifizierung (E1) ein automatisches Lernen unter Verwendung von Klassifizierungsmodellen einsetzt.

6. Verfahren nach Anspruch 5,
**dadurch gekennzeichnet, dass** es mindestens einen Schritt des Lernens (E0A) umfasst, vor dem Schritt der Erfassung und der Identifizierung (E1) eingesetzt, der darin besteht, die Klassifizierungsmodelle zu erzeugen.

7. Verfahren nach einem der vorstehenden Ansprüche,
**dadurch gekennzeichnet, dass** die dreidimensionalen Modelle (M) von Zielen (4) geometrische Darstellungen der Ziele (4) in Form von Polygonen im Raum sind.

8. Verfahren nach einem der vorstehenden Ansprüche,
**dadurch gekennzeichnet, dass** es mindestens einen Schritt der Erzeugung (E0B) umfasst, vor dem Schritt der Erfassung und der Identifizierung (E1) eingesetzt, der darin besteht, die dreidimensionalen Modelle (M) zu erzeugen.

9. Verfahren nach Anspruch 6,
**dadurch gekennzeichnet, dass** der Schritt des Lernens (E0A) einen der folgenden Algorithmen einsetzt:
- mindestens einen Stützvektormaschinen-Algorithmus;
- mindestens einen Algorithmus auf der Grundlage eines Random Forest;
- mindestens ein Convolutional Neural Network.

10. Verfahren nach einem der vorstehenden Ansprüche,
**dadurch gekennzeichnet, dass** es zudem mindestens einen der folgenden Schritte umfasst:
- einen Schritt der Bilderzeugung (E0C), vor dem Schritt der Erfassung und der Identifizierung (E1) eingesetzt, der darin besteht, mindestens ein Bild (I) mithilfe des Bildgenerators (6) ausgehend von der Position (P1) des Beobachters (2) zu erzeugen;
- einen Schritt der Informationsübertragung (E3), nach dem Schritt der Abstandsschätzung (E2) eingesetzt, der darin besteht, mindestens den geschätzten Abstand (D) an mindestens ein Benutzersystem zu übertragen.

11. Verfahren nach einem der Ansprüche 1 bis 10,
**dadurch gekennzeichnet, dass** es auf automatische Weise eingesetzt wird.

12. Verfahren nach einem der Ansprüche 1 bis 10,
**dadurch gekennzeichnet, dass** der Schritt der Erfassung und der Identifizierung (E1) auf halbautomatische Weise eingesetzt wird, und dadurch, dass der Schritt der Abstandschätzung (E2) auf automatische Weise eingesetzt wird.

13. Vorrichtung zur Schätzung eines Abstandes zwischen einer Position eines Beobachters und einem Ziel mithilfe mindestens eines Bildes (I), das von einem numerischen Bildgenerator (6) ausgehend von der Position (P1) des Beobachters (2) erzeugt wird,
**dadurch gekennzeichnet, dass** sie umfasst:
- eine Erfassungs- und Identifizierungseinheit (8), die dazu ausgelegt ist, mindestens ein Ziel (4) im Bild (I) ausgehend von mindestens einer Liste bekannter Ziele zu erfassen und zu identifizieren, und dazu, eine abgebildete Darstellung (22) des identifizierten Ziels (4) zu definieren; und
- eine Abstandschätzungseinheit (10), die ausgelegt ist zum:
- Ausführen, auf dem Bild (I), einer Vielzahl von unterschiedlichen Projektionen eines dreidimensionalen Modells (M) des identifizierten Ziels (4), um projizierte Darstellungen (29, 30) des Ziels (4) zu erhalten, wobei die projizierten Darstellungen (29, 30) von Eigenschaften des Bildgenerators (6) abhängen, wobei jede der projizierten Darstellungen (29, 30) repräsentativ ist für einen mit dem Ziel (4) verknüpften Abstand und eine mit dem Ziel (4) verknüpfte Ausrichtung;
- Vergleichen der abgebildeten Darstellung (22) des Ziels (4) mit jeder der projizierten Darstellungen (29, 30), indem jeder der projizierten Darstellungen (29, 30) in Abhängigkeit von der Qualität der Entsprechung eine Note zugewiesen wird, wobei die Qualität der Entsprechung dem Integrationsmaß, entlang der Kontur der projizierten Darstellung (29, 30), des Abstands zwischen der Kontur der abgebildeten Darstellung (22) und der Kontur der projizierten Darstellung (29, 30) entspricht; und
- Auswählen der projizierten Darstellung (30), die die beste Note aufweist, wobei der mit dieser ausgewählten projizierten Darstellung (30) verknüpfte Abstand den geschätzten Abstand (D) zwischen der Position des Beobachters (2) und dem Ziel (4) darstellt.

14. Vorrichtung nach Anspruch 13,
**dadurch gekennzeichnet, dass** sie zudem mindestens eines der folgenden Elemente umfasst:
- mindestens eine vorbestimmte Datenbank (14, 20), die mindestens die Liste bekannter Ziele (4) und/oder die dreidimensionalen Modelle (M) enthält;
- den numerischen Bildgenerator (6), der dazu ausgelegt ist, mindestens ein Bild (I) ausgehend von der Position (P1) des Beobachters (2) zu erzeugen;
- eine Informationsübertragungseinheit, die dazu ausgelegt ist, mindestens den geschätzten Abstand (D) an mindestens ein Benutzersystem zu übertragen.

## Claims

1. A method for estimating the distance between a position of an observer and a target, using at least one image (I) generated by a digital image generator (6) from the position (P1) of the observer (2),
**characterized in that** it comprises a sequence of steps comprising:
- a detection and identification step (E1) consisting in detecting and identifying at least one target (4) in the image (I), from at least one list of known targets, and in defining an imaged representation (22) of the identified target (4); and
- a distance estimation step (E2) comprising:
• a projection sub-step (E2A) consisting in performing on the image (I) a plurality of different projections of a three-dimensional model (M) of said identified target (4) in order to obtain projected representations (29, 30) of the target (4), said projected representations (29, 30) depending on characteristics of the image generator (6), each of said projected representations (29, 30) being representative of an associated distance of the target (4) and an associated orientation of the target (4);
• a comparison sub-step (E2B) consisting in comparing the imaged representation (22) of the target (4) to each of said projected representations (29, 30), the comparison sub-step (E2B) consisting in assigning a score to each of said projected representations (29, 30) according to the quality of the match, the quality of the match corresponding to the measure of the integration, along the outline of the projected representation (29, 30), of the distance between the outline of the imaged representation (22) and the outline of said projected representation (29, 30); and
• a selection sub-step (E2C) consisting in selecting the projected representation (30) with the best score, the distance associated with that selected projected representation (30) representing said estimated distance (D) between the position of the observer (2) and the target (4).

2. The method according to claim 1,
**characterized in that** the detection and identification step (E1) comprises:
- a detection sub-step (E1A) consisting in detecting at least one target (4) in the image (I); and
- a recognition and identification sub-step (E1B) consisting in assigning a class to the detected target (4).

3. The method according to claim 2,
**characterized in that** the detection sub-step (E1A) consists in performing one of the following operations on the image (I): identifying pixels of the target (4), identifying pixels of an outline (23) of the target (4), generating a bounding box (24) encompassing the target (4).

4. The method according to any of claims 2 and 3,
**characterized in that** the class is one of the following classes: a recognition class, an identification class, the attribution of a recognition class corresponding to the attribution of a generic category; and the attribution of an identification class corresponding to the attribution of a precise model of a generic category.

5. The method according to any one of the preceding claims,
**characterized in that** the detection and identification step (E1) implements a machine learning using classification models.

6. The method according to claim 5,
**characterized in that** it comprises at least one learning step (E0A), implemented prior to the detection and identification step (E1), consisting in generating said classification models.

7. The method according to any one of the preceding claims **characterized in that** said three-dimensional models (M) of targets (4) are geometric representations of the targets (4) as polygons in space.

8. The method according to any one of the preceding claims,
**characterized in that** it comprises at least one generation step (E0B), implemented prior to the detection and identification step (E1), consisting in generating said three-dimensional models (M).

9. The method according to claim 6,
**characterized in that** said learning step (E0A) implements one of the following algorithms:
- at least one support vector machine algorithm;
- at least one algorithm based on a decision tree forest;
- at least one convolutional neural network.

10. The method according to any one of the preceding claims, **characterized in that** it further comprises at least one of the following steps:
- an image generation step (E0C), implemented prior to the detection and identification step (E1), consisting in generating at least one image (I) using the image generator (6) from the position (P1) of the observer (2);
- an information transmission step (E3), implemented after the distance estimation step (E2), consisting in transmitting at least the estimated distance (D) to at least one user system.

11. The method according to any one of claims 1 to 10,
**characterized in that** it is implemented automatically.

12. The method according to any one of claims 1 to 10,
**characterized in that** the detection and identification step (E1) is implemented semi-automatically, and **in that** the distance estimation step (E2) is implemented automatically.

13. A device for estimating the distance between a position of an observer and a target, using at least one image (I) generated by a digital image generator (6) from the position (P1) of the observer (2),
**characterized in that** it comprises:
- a detection and identification unit (8) configured to detect and identify at least one target (4) in the image (I), from at least one list of known targets, and to define an imaged representation (22) of the identified target (4); and
- a distance estimation unit (10) configured to:
- perform, on the image (I), a plurality of different projections of a three-dimensional model (M) of said identified target (4) to obtain projected representations (29, 30) of the target (4), the projected representations (29, 30) being dependent on characteristics of the image generator (6), each of said projected representations (29, 30) being representative of an associated distance of the target (4) and an associated orientation of the target (4);
- compare the imaged representation (22) of the target (4) with each of said projected representations (29, 30), by assigning a score to each of said projected representations (29, 30) according to the quality of the match, the quality of the match corresponding to the measure of the integration, along the outline of the projected representation (29, 30), of the distance between the outline of the imaged representation (22) and the outline of said projected representation (29, 30); and
- select the projected representation (30) with the best score, the distance associated with this selected projected representation (30) representing said estimated distance (D) between the position of the observer (2) and the target (4).

14. The device according to claim 13,
**characterized in that** it further comprises at least one of the following elements:
- at least one predetermined database (14, 20) containing at least said list of known targets (4) and/or said three-dimensional models (M);
- the digital image generator (6) configured to generate at least one image (I) from the position (P1) of the observer (2);
- an information transmission unit configured to transmit at least the estimated distance (D) to at least one user system.
